# EUROPEAN PATENT SPECIFICATION

(11) **EP 2 169 877 B1**
(45) Date of publication and mention of the grant of the patent: **25.01.2012**
(21) Application number: 08800740.6
(22) Date of filing: 01.09.2008
(51) Int. Cl.: H04L 12/46

(54) **PROCESSING METHOD AND DEVICE FOR QINQ TERMINATION CONFIGURATION**
BEARBEITUNGSVERFAHREN UND GERÄT FÜR QINQ BEENDIGUNGSKONFIGURATION
PROCÉDÉ DE TRAITEMENT ET DISPOSITIF POUR LA CONFIGURATION DE RACCORDEMENT QINQ

(30) Priority: 03.09.2007 CN 200710145853
(43) Date of publication of application: 31.03.2010
(73) Proprietor: Huawei Technologies Co., Ltd., Longgang District, Shenzhen Guangdong 518129 (CN)
(72) Inventor: DAI, Honglin Huawei Technologies Co., Ltd., Shenzhen 518129 (CN); LU, Yan Huawei Technologies Co., Ltd., Shenzhen 518129 (CN); FAN, Bin Huawei Technologies Co., Ltd., Shenzhen 518129 (CN); SUN, Guichen Huawei Technologies Co., Ltd., Shenzhen 518129 (CN); WANG, Cheng Huawei Technologies Co., Ltd., Shenzhen 518129 (CN)
(74) Representative: Isarpatent
(86) International application number: PCT/CN2008/072228
(87) International publication number: WO 2009/030173

(56) References cited:
- CN-A- 1 838 627
- CN-A- 1 838 628
- CN-A- 101 005 437
- CN-A- 101 106 512
- US-A1- 2002 027 906
- US-A1- 2007 195 780
- CISCO: "Configuring IEEE 802.1Q-in-Q VLAN Tag Termination" CISCO 1000 SERIES ROUTER BROADBAND AGGREGATION, LEASED LINE AND MPLS CONFIGURATION GUIDE, 14 March 2005 (2005-03-14), pages 1-8, XP002587602

## Description

### FIELD OF THE INVENTION

The present invention relates to the communications technology, and in particular, to a processing method and device for 802.1Q in 802.1Q (QinQ, a two-layer virtual local area network (VLAN) encapsulation technology) termination configuration.

### BACKGROUND OF THE INVENTION

As operators deploy more and more Ethernet technologies on networks, using the 802.1Q VLAN to isolate and identify users is limited because the VLAN tag field defined in IEEE802.1Q contains only 12 bits that can represent 2¹² = 4096 VLANs. As a result, only a few users can be identified. Thus, the QinQ technology emerges.

The QinQ technology is initially designed to extend the number of VLANs. Based on the existing 802.1Q message, the QinQ technology adds an 802.1Q tag to increase the number of VLANs to 4096 x 4096. With the network development and the intensive operation requirement of operators, the functions of the QinQ two-layer tag are extended so that the inner and outer tags represent different information. For example, an inner tag represents a user, and an outer tag represents a service (such as IPTV or Internet) or a region (such as a switch in a specified community).

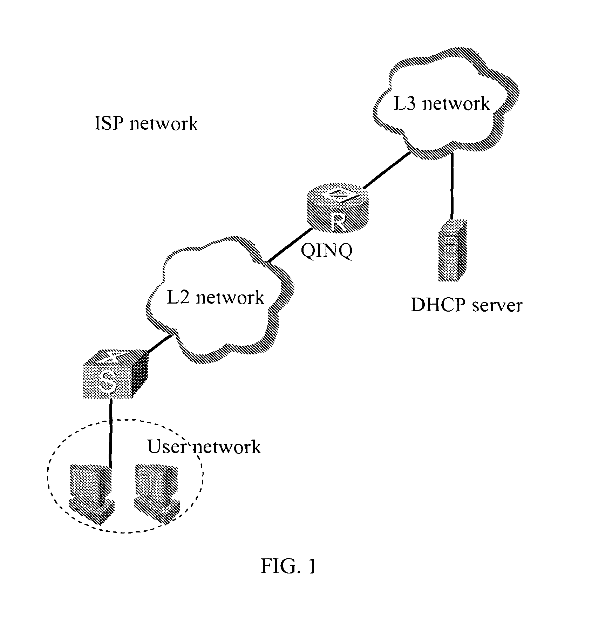

QinQ termination is used to identify the two-layer tag of a QinQ message and then to strip or transmit the QinQ message according to the subsequent forwarding behavior. At present, QinQ termination is used on the user access network and is usually configured on a routing device. FIG. 1 shows an application scenario of QinQ termination. The routing device that supports QinQ termination can support tens of thousands of users and each user is identified by one pair of inner and outer VLAN tags. All the QinQ termination configurations are manual and static. The system allocates system resources such as the entry and counter to users according to the QinQ termination configuration.

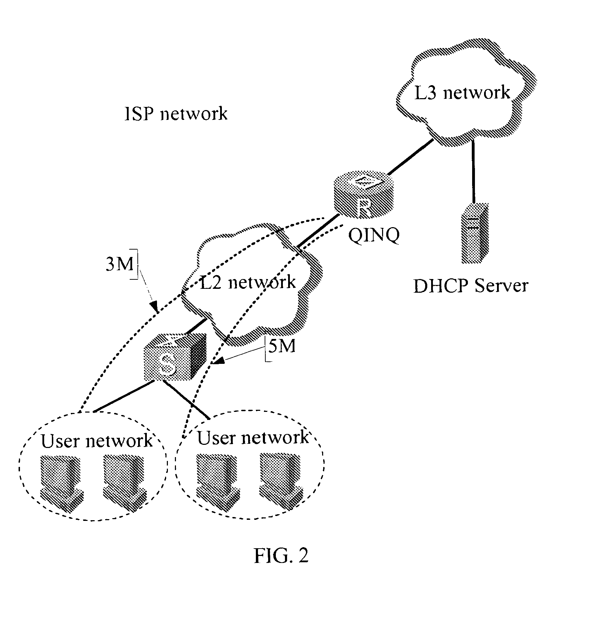

In the IPTV service, for example, if an operator needs to plan two bandwidth types (3 Mbps and 5 Mbps) and 1000 IPTV users for each bandwidth type, the operator must complete the relevant configuration including the bandwidth allowed for each group on the interfaces of the routing devices that support QinQ termination, and differentiate the groups of various users according to the inner and outer VLAN tags, as shown in FIG. 2. All the configured resources need to be allocated even though only 100 users subscribe to the IPTV service.

However, the following deficiencies of the prior art have become apparent: The device management is complex. For example, in the mass applications of the IPTV service, many users are connected and operators need to configure a great amount of information. As a result, it is difficult for operators to remember the mappings between VLANs and users, and to manage devices. In addition, the implementation efficiency is low and resources are wasted. That is because the system allocates resources to each possible user even though the user does not watch IPTV online in most of time.
US20070195780A1 describes techniques that allow a network device, such as a router, to dynamically build VLAN interfaces based on subscriber information strings included within packets. In particular, the network device comprises an interface controller and a forwarding controller, where the forwarding controller receives the packet over an Ethernet port and forwards the received packet to the interface controller. The packet includes both Ethernet tagging information and a subscriber information string. The interface controller comprises an Ethernet module that dynamically builds a primary virtual local area network (VLAN) sub-interface (PVS) based on the Ethernet tagging information. The Ethernet module also dynamically builds a subscriber VLAN sub-interface (SVS) based on the subscriber information string. The SVS allows the network device to distinguish between subscribers residing on the same VLAN, and, therefore, to provide subscriber specific services.

### SUMMARY OF THE INVENTION

The present invention provides a processing method and device for QinQ termination configuration to dynamically maintain the QinQ termination configuration of a user on a QinQ termination device.

As a first aspect of the invention the processing method for QinQ termination configuration includes:
creating QinQ termination configuration for a user after determining that the user is online: and
deleting the QinQ termination configuration of the user after determining that the user is offline;
wherein the step of creating the QinQ termination configuration for the user after determining that the user is online comprises:
determining (s101) that the user is online according to an obtained message;
determining (s102) whether an outer virtual local area network, VLAN, tag of the obtained message is within a range preset under the physical interface; and
creating (s103) the QinQ termination configuration for the user according to the obtained message when the outer VLAN tag is within the preset range;
wherein the step of deleting the QinQ termination configuration of the user after determining that the user is offline comprises:
determining that the user is offline according to the obtained message and deleting the QinQ termination configuration of the user; or
determining that the user is offline according to an aging mechanism when the user goes offline abnormally and deleting the QinQ termination configuration of the user.

As a second aspect of the invention the processing device for QinQ termination configuration includes:
an online detecting unit, adapted to notify a configuration creating unit when detecting that a user is online:
the configuration creating unit, adapted to create QinQ termination configuration for the user;
an offline detecting unit, adapted to notify a configuration deleting unit when detecting that the user is offline; and
the configuration deleting unit, adapted to delete QinQ termination configuration of the user:
wherein the online detecting unit (10) comprises:
an online message obtaining subunit (11), adapted to: determine that the user is online according to an obtained message and send the obtained message to a judging subunit; and
the judging subunit (12), adapted to: determine whether an outer virtual local area network, VLAN, tag of the message sent from the online message obtaining subunit is within a range preset under the physical interface, send the message to the configuration creating unit if the outer VLAN tag is within the preset range;
wherein the offline detecting unit (30) comprises:
an offline message obtaining subunit (31), adapted to: determine whether the user is offline according to the obtained message; and notify the configuration deleting unit to delete the QinQ termination configuration of the user when the user is offline.

As a third aspect of the invention the processing device for 802.1Q in 802.1 Q, QinQ, termination configuration, includes:
an online detecting unit (10), adapted to notify a configuration creating unit (20) when detecting that a user is online;
the configuration creating unit (20), adapted to create QinQ termination configuration for the user;
an offline detecting unit (30), adapted to notify a configuration deleting unit (40) when detecting that the user is offline; and
the configuration deleting unit (40), adapted to delete QinQ termination configuration of the user;
wherein the online detecting unit (10) comprises:
an online message obtaining subunit (11), adapted to: determine that the user is online according to an obtained message and send the obtained message to a judging subunit; and
the judging subunit (12), adapted to: determine whether an outer virtual local area network, VLAN, tag of the message sent from the online message obtaining subunit is within a range preset under the physical interface, send the message to the configuration creating unit if the outer VLAN tag is within the preset range;
wherein the offline detecting unit (30) comprises:
an aging subunit (32), adapted to: determine whether the user is offline when an entry of the user meets a preset aging mechanism; and notify the configuration deleting unit to delete the QinQ termination configuration of the user when the user is offline.

As a fourth aspect of the invention the computer-readable medium having stored thereon a plurality of instructions, the plurality of instructions including instructions which, when executed by a processor, cause the processor to implement a processing method for 802.1Q in 802.1Q, QinQ, termination configuration, wherein the method comprises:
creating QinQ termination configuration for a user after determining that the user is online; and
deleting the QinQ termination configuration of the user after determining that the user is offline:
wherein the step of creating the QinQ termination configuration for the user after determining that the user is online comprises:
determining (s101) that the user is online according to an obtained message;
determining (s102) whether an outer virtual local area network, VLAN, tag of the obtained message is within a range preset under the physical interface; and
creating (s103) the QinQ termination configuration for the user according to the obtained message when the outer VLAN tag is within the preset range:
wherein the step of deleting the QinQ termination configuration of the user after determining that the user is offline comprises:
determining that the user is offline according to the obtained message and deleting the QinQ termination configuration of the user; or
determining that the user is offline according to an aging mechanism when the user goes offline abnormally and deleting the QinQ termination configuration of the user. Compared with the prior art, the present invention has the following merit:
   A QinQ termination device can be dynamically configured according to the online and offline detection of users, which facilitates user management and effectively improves the resource usage.

### BRIEF DESCRIPTION OF THE DRAWINGS

FIG. 1 shows a network structure of a QinQ termination device in the prior art;
FIG. 2 shows a structure of static QinQ termination configuration in the prior art;
FIG. 3 shows a processing method for QinQ termination configuration in a first embodiment of the present invention;
FIG. 4 shows a processing method for QinQ termination configuration in a second embodiment of the present invention;
FIG. 5 shows a processing method for QinQ termination configuration in a third embodiment of the present invention; and
FIG. 6 shows a processing device for QinQ termination configuration in a fourth embodiment of the present invention.

### DETAILED DESCRIPTION OF THE INVENTION

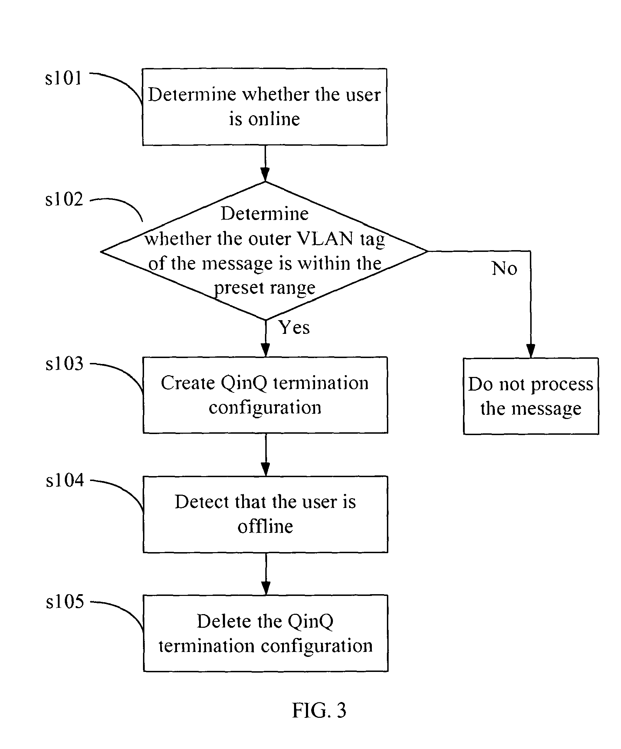

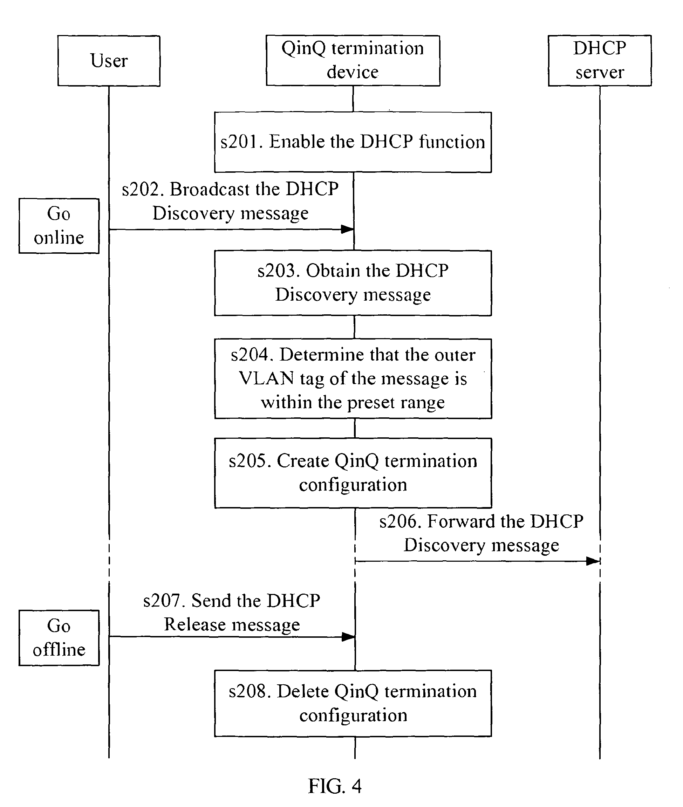

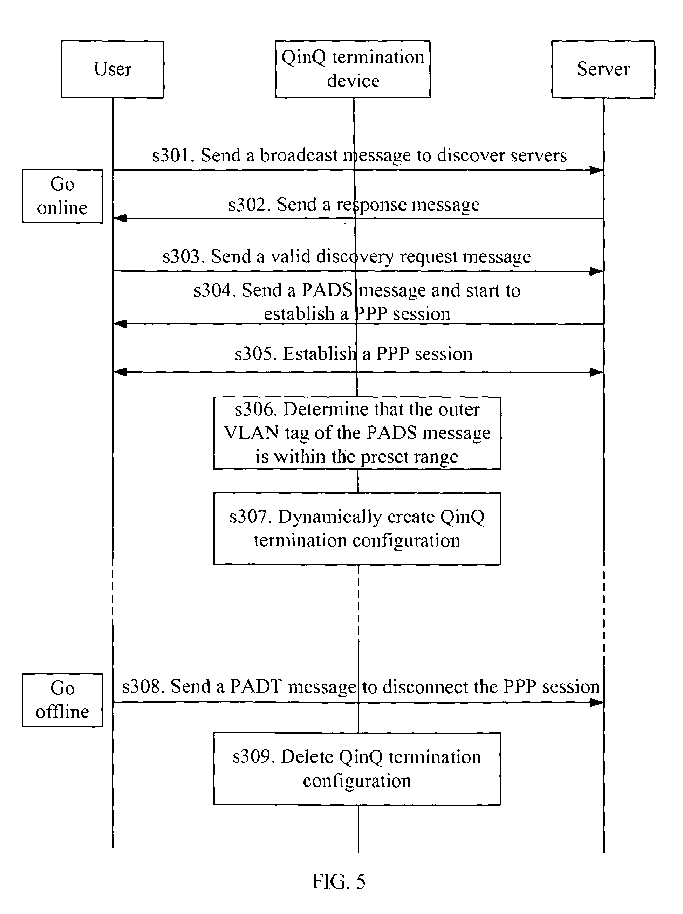

The present invention is hereinafter described in detail with reference to the accompanying drawings and exemplary embodiments. The first embodiment of the present invention provides a processing method for QinQ termination configuration. FIG. 3 shows the processing method, which includes the following steps:
Step s101: Determine whether a user is online.
   Specifically, whether the user is online is determined according to the message sent when the user goes online.
Step s102: Determine whether the outer VLAN tag of the message is within the preset range during service deployment. If the outer VLAN tag of the message is within the preset range during service deployment, proceed to step s103.
   If the outer VLAN tag of the message is not within the preset range during service deployment, the message is not processed. This case is not further described.
   The range of the outer VLAN tag of QinQ is already preset.
Step s103: Create QinQ termination configuration.
Step s104: Detect that the user is offline.
   Specifically, whether the user is offline is determined according to the message sent when the user goes offline or according to the set aging mechanism.
   When the user goes offline normally, the user exchanges the offline message with the network side. As specified in the Dynamic Host Configuration Protocol (DHCP), the user needs to send a DHCP Release message to the DHCP server before going offline. The user goes offline normally after the DHCP server reclaims the IP address allocated to the user. Thus, these offline messages can be used to determine whether a user is offline.
   When the user goes offline abnormally, for example, when the computer is restarted or the network is faulty, no offline message is exchanged. In this case, other standards need to be used to determine whether the user is offline. For example, an aging mechanism can be used to determine whether the user is offline. In DHCP, for example, the network device obtains the IP address entry of the user through DHCP Snooping and stores the IP address entry. If the leased IP address entry expires, the network device can determine that the user is offline when failing to receive the message for renewing the IP address from the user.
Step s105: Delete the QinQ termination configuration of the user.
   The second embodiment of the present invention provides a DHCP-based processing method for QinQ termination configuration. As shown in FIG. 4, the processing method includes the following steps:
Step s201: The DHCP function is enabled on the sub-interface of the QinQ termination device.
Step s202: When going online, the user broadcasts a DHCP Discovery message to discover a DHCP server and request an IP address.
Step s203: The QinQ termination device obtains the DHCP Discovery message.
Step s204: The QinQ termination device obtains DHCP Option82 from the DHCP Discovery message and determines that the outer VLAN tag of the DHCP Discovery message in DHCP Option82 is within the preset range. If the outer VLAN tag is beyond the preset range, the DHCP Discovery message is not processed. This case is not further described.
   The range of the outer VLAN tag is preset under the physical interface, which ensures the security to a certain degree. In general, the digital subscriber line access multiplexer (DSLAM) adds DHCP Option82 carrying the ID of a switch port from which the DHCP request message from the user is sent to the network and the MAC address of the switch to the DHCP message of the user. Then the DHCP server can execute the IP address allocation policy or other polices according to DHCP Option82.
Step s205: The QinQ termination device creates QinQ termination configuration under the corresponding interface according to the outer VLAN tag of the DHCP Discovery message in DHCP Option82.
Step s206: The QinQ termination device forwards the DHCP Discovery message to the DHCP server.
Step s207: The user sends a DHCP Release message to the QinQ termination device when going offline normally.
Step s208: The QinQ termination device deletes the QinQ termination configuration of the user and releases resources.
   If the user goes offline due to the fault of the user side or intermediate device, the aging mechanism is executed. Three aging mechanisms are provided:
   (1) Aging mechanism implemented by binding the QinQ termination device with the DHCP snooping function
      At first, the DHCP snooping function is enabled on the sub-interface of the QinQ termination device. The DHCP snooping function is a security feature of DHCP. A DHCP snooping binding table is established and maintained to filter out untrustworthy DHCP information. The DHCP snooping binding table includes the MAC addresses, IP addresses, lease terms, and VLAN-ID interfaces of the users in untrustworthy areas.
      The QinQ termination device determines whether the IP address leased by the user expires according to the IP address lease term in the DHCP snooping binding table. If the leased IP address expires but no message for renewing the IP address is received from the user, the QinQ termination device ages the corresponding entry of the IP address of the user, regards that the user is offline, and deletes the QinQ termination configuration of the user.
   (2) Aging mechanism implemented by the QinQ termination device
      The QinQ termination device stores the IP address lease term specified in DHCP and creates an aging timer. The IP address lease term specified in DHCP is usually long and is in days. Thus, the duration of the aging timer can be shortened to an acceptable range such as one hour. When the aging timer reaches the preset time, the QinQ termination device sends an Address Resolution Protocol (ARP) message to the user to detect whether the user is online. If no response message is received from the user, the QinQ termination device regards that the user is offline and the QinQ termination configuration of the user can be deleted. In addition, the QinQ termination device notifies the relevant devices on the network side that the user is already offline.
   (3) ARP-based aging mechanism
      The cache table used to record the IP addresses of users in ARP adopts the aging mechanism. Within the preset aging time, if the ARP entry of a user in the cache table is not refreshed, the user is regarded as offline and the QinQ termination configuration of the user corresponding to the ARP entry will be deleted.
      With the foregoing embodiments of the present invention, DHCP can be used to detect whether a user is online or offline and the dynamic configuration is implemented for QinQ termination devices. This can facilitate user management and effectively improve the resource usage.
      The third embodiment of the present invention provides a Point-to-Point Protocol (PPP)-based processing method for QinQ termination configuration. In this processing method, the user communicates with the server through a point-to-point link. As shown in FIG. 5, the processing method includes the following steps:
Step s301: The user sends a broadcast message to obtain the Ethernet MAC addresses of servers when the user goes online.
Step s302: Each server that receives the request message sends a response message to the user.
Step s303: The user selects one of the servers that send a response message and sends a valid discovery request message to the selected server.
   The user selects the server according to the name and type labels of the server and service.
Step s304: After receiving the discovery request message, the server starts a PPP session and sends a PPPoE Active Discovery Session-confirmation (PADS) message to the user.
Step s305: After receiving the PADS message, the user establishes a PPP session.
Step s306: The QinQ termination device determines that the outer VLAN tag of the PADS message is within the preset range. If the outer VLAN tag is beyond the preset range, the PADS message is not processed. This case is not further described.
Step s307: The QinQ termination device creates QinQ termination configuration according to the PADS message.
   Specifically, the QinQ termination device creates QinQ termination configuration according to the VLAN information of the user in the PADS message.
Step s308: The user sends a PPPoE Active Discovery Terminate (PADT) message to the QinQ termination device to disconnect the PPP session when the user goes offline normally.
Step s309: The QinQ termination device deletes the QinQ termination configuration of the user according to the PADT message.
   If the user goes offline due to the fault of the user side or intermediate device, the aging mechanism is executed. The execution process is no longer described.
   With the foregoing embodiments of the present invention, the establishment and disconnection of a PPP session can be used to detect whether a user is online or offline and the dynamic configuration is implemented for QinQ termination devices. This can facilitate user management and effectively improve the resource usage.

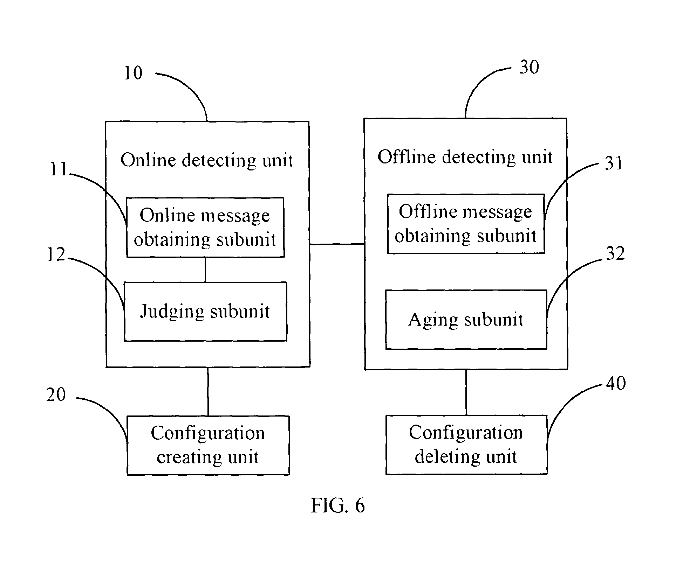

The fourth embodiment of the present invention provides a processing device for QinQ termination configuration. As shown in FIG. 6, the processing device may be a routing device in a network and includes:
an online detecting unit 10, adapted to notify a configuration creating unit 20 when detecting that a user is online;
the configuration creating unit 20, connected to the online detecting unit 10 and adapted to create QinQ termination configuration for the user;
an offline detecting unit 30, adapted to notify a configuration deleting unit 40 when detecting that the user is offline; and
the configuration deleting unit 40, connected to the offline detecting unit 30 and adapted to delete QinQ termination configuration of the user.

The online detecting unit 10 further includes an online message obtaining subunit 11 and a judging subunit 12.

The online message obtaining subunit 11 is adapted to: determine that the user is online according to an obtained message; and send the obtained message to a judging subunit 12. The message may be a DHCP Discovery message or a PADS message.

The judging subunit 12 is adapted to determine whether the outer VLAN tag of the message sent from the online message obtaining subunit 11 is within the preset range. If the outer VLAN tag of the message sent from the online message obtaining subunit 11 is within the preset range, the judging subunit 12 sends the message to the configuration creating unit 20. If the outer VLAN tag of the message sent from the online message obtaining subunit 11 is out of the preset range, the judging subunit 12 does not process the message. The message carries the VLAN information of the user and the VLAN information is used for the configuration creating unit 20 to dynamically create QinQ termination configuration.

The offline detecting unit 30 further includes an offline message obtaining subunit 31 and an aging subunit 32.

The offline message obtaining subunit 31 is adapted to: determine whether the user is offline according to the obtained message; and notify the configuration deleting unit 40 to delete the QinQ termination configuration of the user when the user is offline.

The aging subunit 32 is adapted to: determine whether the user is offline when the entry of the user meets a preset aging mechanism; and notify the configuration deleting unit 40 to delete the QinQ termination configuration of the user when the user is offline.
The aging mechanism includes:
(1) Binding the DHCP snooping function
   The IP address lease term in the DHCP snooping binding table is used to determine whether the IP address leased by the user expires. It is determined that the user is offline if the leased IP address expires.
(2) Creating an aging timer locally and shortening the aging time to an acceptable range
   The ARP message is used to detect whether the user is online. It is determined that the user is offline if no response message is received from the user.
(3) Performing ARP-based aging
   The cache table for recording IP addresses in ARP adopts the aging mechanism. If an ARP entry is not refreshed within the preset aging time, the corresponding user of the ARP entry is regarded as offline. In this case, the ARP entry is deleted.

The processing device for QinQ termination configuration implements the dynamic configuration of QinQ termination devices, and thus facilitates user management, and effectively improves the resource usage.

After reading the foregoing embodiments, those skilled in the art may understand that embodiments of the present invention may be implemented by hardware or by software in combination with a necessary hardware platform. Thus, the technical solution of the present invention may be made into software. The software may be stored in a non-volatile storage medium such as a Compact Disc-Read Only Memory (CD-ROM), a USB disk, or a mobile hard disk, and include several instructions that instruct a computer device such as a personal computer, a server, or a network device to implement the methods provided in each embodiment of the present invention.

Although the present invention has been described through several exemplary embodiments, the invention is not limited to such embodiments.

## Claims

1. A processing method for 802.1Q in 802.1Q, QinQ, termination configuration, comprising:
creating (s103) QinQ termination configuration for a user after determining (s101) that the user is online; and
deleting (s105) the QinQ termination configuration of the user after determining (s104) that the user is offline;
wherein the step of creating (s103) the QinQ termination configuration for the user after determining that the user is online comprises:
determining (s101) that the user is online according to an obtained message;
determining (s102) whether an outer virtual local area network, VLAN, tag of the obtained message is within a range preset under the physical interface; and
creating (s103) the QinQ termination configuration for the user according to the obtained message when the outer VLAN tag is within the preset range;
wherein the step of deleting the (s105) QinQ termination configuration of the user after determining that the user is offline comprises:
determining that the user is offline according to the obtained message and deleting the QinQ termination configuration of the user; or
determining that the user is offline according to an aging mechanism when the user goes offline abnormally and deleting the QinQ termination configuration of the user.

2. The processing method of claim 1, wherein the obtained message is a Dynamic Host Configuration Protocol, DHCP, Discovery message and the VLAN information of the user in the obtained message is used to dynamically create QinQ termination configuration; and
wherein the obtained message is a Dynamic Host Configuration Protocol, DHCP, Release message when the user goes offline normally

3. The processing method of claim 1, wherein the obtained message is a PPPoE Active Discovery Session-Confirmation, PADS, message and the VLAN information of the user in the obtained message is used to dynamically create the QinQ termination configuration; and
wherein the obtained message is a Dynamic Host Configuration Protocol, DHCP, Release message or a PPPoE Active Discovery Terminate, PADT, message when the user the user goes offline normally.

4. The processing method of claim 1, wherein the step of determining (s104) that the user is offline according to the aging mechanism comprises:
determining, by Dynamic Host Configuration Protocol, DHCP, that the user is offline when detecting that an IP address lease term in a DHCP snooping binding table expires;
determining that the user is offline when receiving no response after periodically sending an Address Resolution Protocol, ARP, message to the user; or
determining that the user is offline when an ARP entry of the user is aged and deleted.

5. A processing device for 802.1Q in 802.1Q, QinQ, termination configuration, comprising:
an online detecting unit (10), adapted to notify a configuration creating unit (20) when detecting that a user is online;
the configuration creating unit (20) adapted to create QinQ termination configuration for the user;
an offline detecting unit (30), adapted to notify a configuration deleting unit (40) when detecting that the user is offline; and
the configuration deleting unit (40) being adapted to delete QinQ termination configuration of the user;
wherein the online detecting unit (10) comprises:
an online message obtaining subunit (11), adapted to: determine that the user is online according to an obtained message and send the obtained message to a judging subunit (12); and
the judging subunit (12) being adapted to: determine whether an outer virtual local area network, VLAN, tag of the message sent from the online message obtaining subunit (11) is within a range preset under the physical interface, send the message to the configuration creating unit (20) if the outer VLAN tag is within the preset range;
wherein the offline detecting unit (30) comprises:
an offline message obtaining subunit (31), adapted to: determine whether the user is offline according to the obtained message; and notify the configuration deleting unit (40) to delete the QinQ termination configuration of the user when the user is offline.

6. The processing device of claim 5, wherein the obtained message is a Dynamic Host Configuration Protocol, DHCP, Discovery message and the VLAN information of the user in the obtained message is used to dynamically create QinQ termination configuration; and
wherein the obtained message is a Dynamic Host Configuration Protocol, DHCP, Release message when the user goes offline normally.

7. The processing device of claim 5, wherein the obtained message is a PPPoE Active Discovery Session-Confirmation, PADS, message and the VLAN information of the user in the obtained message is used to dynamically create QinQ termination configuration; and
wherein the obtained message is a Dynamic Host Configuration Protocol, DHCP, Release message or a PPPoE Active Discovery Terminate, PADT, message when the user the user goes offline normally.

8. A processing device for 802.1Q in 802.1Q, QinQ, termination configuration, comprising:
an online detecting unit (10), adapted to notify a configuration creating unit (20) when detecting that a user is online;
the configuration creating unit (20), adapted to create QinQ termination configuration for the user;
an offline detecting unit (30), adapted to notify a configuration deleting unit (40) when detecting that the user is offline; and
the configuration deleting unit (40), adapted to delete QinQ termination configuration of the user;
wherein the online detecting unit (10) comprises:
an online message obtaining subunit (11), adapted to: determine that the user is online according to an obtained message and send the obtained message to a judging subunit; and
the judging subunit (12), adapted to: determine whether an outer virtual local area network, VLAN, tag of the message sent from the online message obtaining subunit is within a range preset under the physical interface, send the message to the configuration creating unit if the outer VLAN tag is within the preset range;
wherein the offline detecting unit (30) comprises:
an aging subunit (32), adapted to: determine whether the user is offline when an entry of the user meets a preset aging mechanism; and notify the configuration deleting unit (40) to delete the QinQ termination configuration of the user when the user is offline.

9. The processing device of claim 8, wherein the obtained message is a Dynamic Host Configuration Protocol, DHCP, Discovery message and the VLAN information of the user in the obtained message is used to dynamically create QinQ termination configuration; and
wherein the obtained message is a Dynamic Host Configuration Protocol, DHCP, Release message when the user goes offline normally.

10. The processing device of claim 8, wherein the obtained message is a PPPoE Active Discovery Session-Confirmation, PADS, message and the VLAN information of the user in the obtained message is used to dynamically create QinQ termination configuration; and
wherein the obtained message is a Dynamic Host Configuration Protocol, DHCP, Release message or a PPPoE Active Discovery Terminate, PADT, message when the user the user goes offline normally.

11. A computer-readable medium having stored thereon a plurality of instructions, the plurality of instructions including instructions which, when executed by a processor, cause the processor to implement a processing method for 802.1 Q in 802.1 Q, QinQ, termination configuration, wherein the method comprises:
creating (s103) QinQ termination configuration for a user after determining (s101) that the user is online; and
deleting (s105) the QinQ termination configuration of the user after determining (s104) that the user is offline;
wherein the step of creating (s103) the QinQ termination configuration comprises:
determining (s101) that the user is online according to an obtained message;
determining (s102) whether an outer virtual local area network, VLAN, tag of the obtained message is within a range preset under the physical interface; and
creating (s103) the QinQ termination configuration for the user according to the obtained message when the outer VLAN tag is within the preset range;
wherein the step of deleting (s105) the QinQ termination configuration of the user comprises:
determining that the user is offline according to the obtained message and deleting the QinQ termination configuration of the user; or
determining that the user is offline according to an aging mechanism when the user goes offline abnormally and deleting the QinQ termination configuration of the user.

12. The computer-readable medium of claim 11, wherein the obtained message is a Dynamic Host Configuration Protocol, DHCP, Discovery message and the VLAN information of the user in the obtained message is used to dynamically create QinQ termination configuration; and
wherein the obtained message is a Dynamic Host Configuration Protocol, DHCP, Release message when the user goes offline normally.

13. The computer-readable medium of claim 11, wherein the obtained message is a PPPoE Active Discovery Session-Confirmation, PADS, message and the VLAN information of the user in the obtained message is used to dynamically create QinQ termination configuration; and
wherein the obtained message is a Dynamic Host Configuration Protocol, DHCP, Release message or a PPPoE Active Discovery Terminate, PADT, message when the user the user goes offline normally.

## Patentansprüche

1. Verarbeitungsverfahren für die 802.1Q-in-802.1Q-Abschlusskonfiguration (QinQ), umfassend:
Anlegen (s103) einer QinQ-Abschlusskonfiguration für einen Benutzer nach dem Bestimmen (s101), dass der Benutzer online ist; und
Löschen (s105) der QinQ-Abschlusskonfiguration des Benutzers nach dem Bestimmen (s104), dass der Benutzer offline ist;
wobei der Schritt des Anlegens (s103) der QinQ-Abschlusskonfiguration für den Benutzer nach dem Bestimmen, dass der Benutzer online ist, Folgendes umfasst:
Bestimmen (s101), dass der Benutzer online ist, gemäß einer erhaltenen Message;
Bestimmen (s102), ob ein äußerer VLAN-Tag (Virtual Local Area Network) der erhaltenen Message innerhalb eines unter der physischen Schnittstelle voreingestellten Bereichs ist; und
Anlegen (s103) der QinQ-Abschlusskonfiguration für den Benutzer gemäß der erhaltenen Message, wenn der äußere VLAN-Tag innerhalb des voreingestellten Bereichs ist;
wobei der Schritt des Löschens (s105) der QinQ-Abschlusskonfiguration des Benutzers nach dem Bestimmen, dass der Benutzer offline ist, Folgendes umfasst:
Bestimmen, dass der Benutzer offline ist, gemäß der erhaltenen Message, und Löschen der QinQ-Abschlusskonfiguration des Benutzers; oder
Bestimmen, dass der Benutzer offline ist, gemäß einem Alterungsmechanismus, wenn der Benutzer anormal offline geht, und Löschen der QinQ-Abschlusskonfiguration des Benutzers.

2. Verarbeitungsverfahren nach Anspruch 1, wobei die erhaltene Message eine DHCP (Dynamic Host Configuration Protocol) Discovery Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message ist, wenn der Benutzer normal offline geht.

3. Verarbeitungsverfahren nach Anspruch 1, wobei die erhaltene Message eine PADS (PPPoE Active Discovery Session Confirmation) Message ist und die VLAN-Informationen des Benutzers in der erhaltenen Message zum dynamischen Anlegen der QinQ-Abschlusskonfiguration verwendet werden; und
wobei die erhaltene Message eine DHCP (Dynamic Host Configuration Protocol) Release Message oder eine PADT (PPPoE Active Discovery Terminate) Message ist, wenn der Benutzer normal offline geht.

4. Verarbeitungsverfahren nach Anspruch 1, wobei der Schritt des Bestimmens (s104), dass der Benutzer offline ist, gemäß dem Alterungsmechanismus Folgendes umfasst:
Bestimmen durch ein DHCP (Dynamic Host Configuration Protocol), dass der Benutzer offline ist, wenn detektiert wird, dass ein IP Adress Lease Term in einer DHCP Snooping Binding Tabelle ausläuft;
Bestimmen, dass der Benutzer offline ist, wenn nach dem periodischen Senden einer ARP (Address Resolution Protocol) Message an den Benutzer keine Antwort empfangen wird; oder
Bestimmen, dass der Benutzer offline ist, wenn ein ARP-Eintrag des Benutzers veraltet ist und gelöscht wird.

5. Einrichtung für die 802. 1Q-in-802.1Q-Abschlusskonfiguration (QinQ), umfassend:
eine Online-Detektierungseinheit (10), ausgelegt zum Benachrichtigen einer Konfigurationsanlegungseinheit (20), wenn detektiert wird, dass ein Benutzer online ist;
wobei die Konfigurationsanlegungseinheit (20) ausgelegt ist zum Anlegen einer QinQ-Abschlusskonfiguration für den Benutzer;
eine Offline-Detektierungseinheit (30), ausgelegt zum Benachrichtigen einer Konfigurationslöschungseinheit (40), wenn detektiert wird, dass der Benutzer offline ist; und
wobei die Konfigurationslöschungseinheit (40) ausgelegt ist zum Löschen der QinQ-Abschlusskonfiguration des Benutzers;
wobei die Online-Detektierungseinheit (10) Folgendes umfasst:
eine Online-Message-Erhaltungsteileinheit (11), ausgelegt zum: Bestimmen, dass der Benutzer online ist, gemäß einer erhaltenen Message und Senden der erhaltenen Message an eine Beurteilungsteileinheit (12); und
wobei die Beurteilungsteileinheit (12) ausgelegt ist zum: Bestimmen, ob ein äußerer VLAN (Outer Virtual Local Area Network) Tag der von der Online-Message-Erhaltungsteileinheit (11) gesendeten Message innerhalb eines unter der physischen Schnittstelle voreingestellten Bereichs ist, Senden der Message an die Konfigurationsanlegungseinheit (20), falls das äußere VLAN-Tag innerhalb des voreingestellten Bereichs ist;
wobei die Offline-Detektierungseinheit (30) Folgendes umfasst:
eine Offline-Message-Erhaltungsteileinheit (31) ausgelegt zum: Bestimmen, ob der Benutzer offline ist, gemäß der erhaltenen Message; und Benachrichtigen der Konfigurationslöschungseinheit (40), die QinQ-Abschlusskonfiguration des Benutzers zu löschen, wenn der Benutzer offline ist.

6. Verarbeitungseinrichtung nach Anspruch 5, wobei die erhaltene Message eine DHCP (Dynamic Host Configuration Protocol) Discovery Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message ist, wenn der Benutzer normal offline geht.

7. Verarbeitungseinrichtung nach Anspruch 5, wobei die erhaltene Message eine PADS (PPPoE Active Discovery Session Confirmation) Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message oder eine PADT (PPPoE Active Discovery Terminate) Message ist, wenn der Benutzer normal offline geht.

8. Verarbeitungseinrichtung für die 802.1Q-in-802.1Q-Abschlusskonfiguration (QinQ), umfassend:
eine Online-Detektierungseinheit (10), ausgelegt zum Benachrichtigen einer Konfigurationsanlegungseinheit (20), wenn detektiert wird, dass ein Benutzer online ist;
wobei die Konfigurationsanlegungseinheit (20) ausgelegt ist zum Anlegen einer QinQ-Abschlusskonfiguration für den Benutzer;
eine Offline-Detektierungseinheit (30), ausgelegt zum Benachrichtigen einer Konfigurationslöschungseinheit (40), wenn detektiert wird, dass der Benutzer offline ist; und
wobei die Konfigurationslöschungseinheit (40) ausgelegt ist zum Löschen der QuinQ-Abschlusskonfiguration des Benutzers;
wobei die Online-Detektierungseinheit (10) Folgendes umfasst:
eine Online-Message-Erhaltungsteileinheit (11), ausgelegt zum: Bestimmen, dass der Benutzer online ist, gemäß einer erhaltenen Message und Senden der erhaltenen Message an eine Beurteilungsteileinheit; und
wobei die Beurteilungsteileinheit (12) ausgelegt ist zum: Bestimmen, ob ein äußerer VLAN (Outer Virtual Local Area Network) Tag der von der Online-Message-Erhaltungsteileinheit gesendeten Message innerhalb eines unter der physischen Schnittstelle voreingestellten Bereichs ist, Senden der Message an die Konfigurationsanlegungseinheit, falls das äußere VLAN-Tag innerhalb des voreingestellten Bereichs ist;
wobei die Offline-Detektierungseinheit (30) Folgendes umfasst:
eine Alterungsteileinheit (32), ausgelegt zum: Bestimmen, ob der Benutzer offline ist, wenn ein Eintrag des Benutzers einen voreingestellten Alterungsmechanismus erfüllt; und Benachrichtigen der Konfigurationslöschungseinheit (40), die QinQ-Abschlusskonfiguration des Benutzers zu löschen, wenn der Benutzer offline ist.

9. Verarbeitungseinrichtung nach Anspruch 8, wobei die erhaltene Message eine DHCP (Dynamic Host Configuration Protocol) Discovery Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message ist, wenn der Benutzer normal offline geht.

10. Verarbeitungseinrichtung nach Anspruch 8, wobei die erhaltene Message eine PADS (PPPoE Active Discovery Session Confirmation) Message ist und die VLAN-Informationen des Benutzers in der erhaltenen Message zum dynamischen Anlegen der QinQ-Abschlusskonfiguration verwendet werden; und
wobei die erhaltene Message eine DHCP (Dynamic Host Configuration Protocol) Release Message oder eine PADT (PPPoE Active Discovery Terminate) Message ist, wenn der Benutzer normal offline geht.

11. Computerlesbares Medium mit darauf gespeicherten mehreren Anweisungen, wobei die mehreren Anweisungen Anweisungen beinhalten, die beim Ausführen durch einen Prozessor bewirken, dass der Prozessor ein Verarbeitungsverfahren für eine 802.1Q-in-802.1Q-Abschlusskonfiguration (QinQ) implementiert, wobei das Verfahren Folgendes umfasst:
Anlegen (s103) einer QinQ-Abschlusskonfiguration für einen Benutzer nach dem Bestimmen (s101), dass der Benutzer online ist; und
Löschen (s105) der QinQ-Abschlusskonfiguration des Benutzers nach dem Bestimmen (s104), dass der Benutzer offline ist;
wobei der Schritt des Anlegens (s103) der QinQ-Abschlusskonfiguration Folgendes umfasst:
Bestimmen (s101), dass der Benutzer online ist, gemäß einer erhaltenen Message;
Bestimmen (s102), ob ein äußerer VLAN (Virtual Local Area Network) Tag der erhaltenen Message innerhalb eines unter der physischen Schnittstelle voreingestellten Bereichs ist; und
Anlegen (s103) der QinQ-Abschlusskonfiguration für den Benutzer gemäß der erhaltenen Message, wenn der äußere VLAN-Tag innerhalb des voreingestellten Bereichs ist;
wobei der Schritt des Löschens (s105) der QinQ-Abschlusskonfiguration des Benutzers Folgendes umfasst:
Bestimmen, dass der Benutzer offline ist, gemäß der erhaltenen Message, und Löschen der QinQ-Abschlusskonfiguration des Benutzers; oder
Bestimmen, dass der Benutzer offline ist, gemäß einem Alterungsmechanismus, wenn der Benutzer anormal offline geht, und Löschen der QinQ-Abschlusskonfiguration des Benutzers.

12. Computerlesbares Medium nach Anspruch 11, wobei die erhaltene Message eine DHCP (Dynamic Host Configuration Protocol) Discovery Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message ist, wenn der Benutzer normal offline geht.

13. Computerlesbares Medium nach Anspruch 11, wobei die erhaltene Message eine PADS (PPPoE Active Discovery Session Confirmation) Message ist und die VLAN-Informationen des Benutzers in der erhaltenen Message zum dynamischen Anlegen einer QinQ-Abschlusskonfiguration verwendet werden; und
wobei die erhaltene Message eine DHCP (Dynamic Host Configuration Protocol) Release Message oder eine PADT (PPPoE Active Discovery Terminate) Message ist, wenn der Benutzer normal offline geht.

## Revendications

1. Procédé de traitement pour une configuration de raccordement de 802.1Q en 802.1Q, ou QinQ, comprenant :
la création (s103) d'une configuration de raccordement QinQ pour un utilisateur après avoir déterminé (s101) que l'utilisateur est connecté ; et
la suppression (s105) de la configuration de raccordement QinQ de l'utilisateur après avoir déterminé (s104) que l'utilisateur est déconnecté ;
dans lequel l'étape de création (s103) de la configuration de raccordement QinQ pour l'utilisateur après avoir déterminé que l'utilisateur est connecté comprend :
la détermination (s101) que l'utilisateur est connecté en fonction d'un message obtenu ;
la détermination (s102) qu'une étiquette de réseau local virtuel externe, VLAN, du message obtenu se trouve ou non dans une plage préétablie par l'interface physique ; et
la création (s103) de la configuration de raccordement QinQ pour l'utilisateur en fonction du message obtenu quand l'étiquette de VLAN externe se trouve dans la plage préétablie ;
dans lequel l'étape de suppression (s105) de la configuration de raccordement QinQ de l'utilisateur après avoir déterminé que l'utilisateur est déconnecté comprend :
la détermination que l'utilisateur est déconnecté en fonction du message obtenu et la suppression de la configuration de raccordement QinQ de l'utilisateur, ou
la détermination que l'utilisateur est déconnecté en fonction d'un mécanisme de vieillissement quand l'utilisateur s'est déconnecté anormalement, et la suppression de la configuration de raccordement QinQ de l'utilisateur.

2. Procédé de traitement selon la revendication 1, dans lequel le message obtenu est un message de Découverte selon le Protocole de Configuration Dynamique d'Hôte, DHCP, et les informations de VLAN de l'utilisateur dans le message obtenu sont utilisées pour créer dynamiquement une configuration de raccordement QinQ ; et
dans lequel le message obtenu est un message de Libération selon le Protocole de Configuration Dynamique d'Hôte, DHCP, quand l'utilisateur se déconnecte normalement.

3. Procédé de traitement selon la revendication 1, dans lequel le message obtenu est un message de Confirmation de Session de Découverte Active PPPoE, PADS, et les informations de VLAN de l'utilisateur dans le message obtenu sont utilisées pour créer dynamiquement la configuration de terminaison QinQ ; et
dans lequel le message obtenu est un message de Libération selon le Protocole de Configuration Dynamique d'Hôte, DHCP, ou un message de Terminaison de Découverte Active PPPoE, PADT, quand l'utilisateur se déconnecte normalement.

4. Procédé de traitement selon la revendication 1, dans lequel l'étape de détermination (s104) que l'utilisateur est déconnecté en fonction du mécanisme de vieillissement comprend :
la détermination, par le Protocole de Configuration Dynamique d'Hôte, DHCP, que l'utilisateur est déconnecté quand il est détecté qu'une condition de bail d'adresse IP dans une table de liaisons de DHCP snooping expire ;
la détermination que l'utilisateur est déconnecté quand aucune réponse n'est reçue après l'envoi périodique d'un message de Protocole de Résolution d'Adresse, ARP, à l'utilisateur ; ou
la détermination que l'utilisateur est déconnecté quand une entrée ARP de l'utilisateur est âgée et supprimée.

5. Dispositif de traitement pour une configuration de raccordement de 802.1Q en 802.1Q, QinQ, comprenant :
une unité de détection de connexion (10), adaptée pour notifier une unité de création de configuration (20) quand il est détecté qu'un utilisateur est connecté ;
l'unité de création de configuration (20) adaptée pour créer la configuration de raccordement QinQ pour l'utilisateur ;
une unité de détection de déconnexion (30), adaptée pour notifier une unité de suppression de configuration (40) quand il est détecté que l'utilisateur est déconnecté ; et
l'unité de suppression de configuration (40) étant adaptée pour supprimer la configuration de raccordement QinQ de l'utilisateur ;
dans lequel l'unité de détection de connexion (10) comprend :
une sous-unité d'obtention de message de connexion (11) adaptée pour : déterminer que l'utilisateur est connecté en fonction d'un message obtenu et envoyer le message obtenu à une sous-unité de jugement (12) ; et
la sous-unité de jugement (12) étant adaptée pour : déterminer qu'une étiquette de réseau local virtuel externe, VLAN, du message envoyé par la sous-unité d'obtention de message de connexion (11) se trouve ou non dans une plage préétablie par l'interface physique, envoyer le message à l'unité de création de configuration (20) si l'étiquette de VLAN externe se trouve dans la plage préétablie ;
dans lequel l'unité de détection de déconnexion (30) comprend :
une sous-unité d'obtention de message de déconnexion (31), adaptée pour: déterminer que l'utilisateur est déconnecté ou non en fonction du message obtenu ; et notifier l'unité de suppression de configuration (40) de supprimer la configuration de raccordement QinQ de l'utilisateur quand l'utilisateur est déconnecté.

6. Dispositif de traitement selon la revendication 5, dans lequel le message obtenu est un message de Découverte selon le Protocole de Configuration Dynamique d'Hôte, DHCP, et les informations de VLAN de l'utilisateur dans le message obtenu sont utilisées pour créer dynamiquement une configuration de raccordement QinQ ; et
dans lequel le message obtenu est un message de Libération selon le Protocole de Configuration Dynamique d'Hôte, DHCP quand l'utilisateur se déconnecte normalement.

7. Dispositif de traitement selon la revendication 5, dans lequel le message obtenu est un message de Confirmation de Session de Découverte Active PPPoE, PADS, et les informations de VLAN de l'utilisateur dans le message obtenu sont utilisées pour créer dynamiquement la configuration de terminaison QinQ ; et
dans lequel le message obtenu est un message de Libération selon le Protocole de Configuration Dynamique d'Hôte, DHCP, ou un message de Terminaison de Découverte Active PPPoE, PADT, quand l'utilisateur se déconnecte normalement.

8. Dispositif de traitement pour une configuration de raccordement de 802.1Q en 802.1Q, QinQ, comprenant :
une unité de détection de connexion (10), adaptée pour notifier une unité de création de configuration (20) quand il est détecté qu'un utilisateur est connecté ;
l'unité de création de configuration (20), adaptée pour créer la configuration de raccordement QinQ pour l'utilisateur ;
une unité de détection de déconnexion (30), adaptée pour notifier une unité de suppression de configuration (40) quand il est détecté que l'utilisateur est déconnecté ; et
l'unité de suppression de configuration (40), adaptée pour supprimer la configuration de raccordement QinQ de l'utilisateur ;
dans lequel l'unité de détection de connexion (10) comprend :
une sous-unité d'obtention de message de connexion (11) adaptée pour : déterminer que l'utilisateur est connecté en fonction d'un message obtenu et envoyer le message obtenu à une sous-unité de jugement ; et
la sous-unité de jugement (12), adaptée pour : déterminer qu'une étiquette de réseau local virtuel externe, VLAN, du message envoyé par la sous-unité d'obtention de message de connexion se trouve ou non dans une plage préétablie par l'interface physique, envoyer le message à l'unité de création de configuration si l'étiquette de VLAN externe se trouve dans la plage préétablie ;
dans lequel l'unité de détection de déconnexion (30) comprend :
une sous-unité de vieillissement (32), adaptée pour : déterminer que l'utilisateur est déconnecté ou non quand une entrée de l'utilisateur satisfait un mécanisme de vieillissement préétabli ; et notifier l'unité de suppression de configuration (40) de supprimer la configuration de raccordement QinQ de l'utilisateur quand l'utilisateur est déconnecté.

9. Dispositif de traitement selon la revendication 8, dans lequel le message obtenu est un message de Découverte selon le Protocole de Configuration Dynamique d'Hôte, DHCP, et les informations de VLAN de l'utilisateur dans le message obtenu sont utilisées pour créer dynamiquement une configuration de raccordement QinQ ; et
dans lequel le message obtenu est un message de Libération selon le Protocole de Configuration Dynamique d'Hôte, DHCP, quand l'utilisateur se déconnecte normalement.

10. Dispositif de traitement selon la revendication 8, dans lequel le message obtenu est un message de Confirmation de Session de Découverte Active PPPoE, PADS, et les informations de VLAN de l'utilisateur dans le message obtenu sont utilisées pour créer dynamiquement la configuration de terminaison QinQ ; et
dans lequel le message obtenu est un message de Libération selon le Protocole de Configuration Dynamique d'Hôte, DHCP, ou un message de Terminaison de Découverte Active PPPoE, PADT, quand l'utilisateur se déconnecte normalement.

11. Support lisible par ordinateur sur lequel est mémorisée une pluralité d'instructions, la pluralité d'instructions comportant des instructions qui, lorsqu'elles sont exécutées par un processeur, amènent le processeur à mettre en oeuvre un procédé de traitement pour une configuration de raccordement de 802.1Q en 802.1Q, ou QinQ, le procédé comprenant :
la création (s103) d'une configuration de raccordement QinQ pour un utilisateur après avoir déterminé (s 101) que l'utilisateur est connecté ; et
la suppression (s105) de la configuration de raccordement QinQ de l'utilisateur après avoir déterminé (s 104) que l'utilisateur est déconnecté,
dans lequel l'étape de création (s103) de la configuration de raccordement QinQ comprend :
la détermination (s101) que l'utilisateur est connecté en fonction d'un message obtenu ;
la détermination (s102) qu'une étiquette de réseau local virtuel externe, VLAN, du message obtenu se trouve ou non dans une plage préétablie par l'interface physique ; et
la création (s103) de la configuration de raccordement QinQ pour l'utilisateur en fonction du message obtenu quand l'étiquette de VLAN externe se trouve dans la plage préétablie ;
dans lequel l'étape de suppression (s105) de la configuration de raccordement QinQ de l'utilisateur comprend :
la détermination que l'utilisateur est déconnecté en fonction du message obtenu et la suppression de la configuration de raccordement QinQ de l'utilisateur ; ou
la détermination que l'utilisateur est déconnecté en fonction d'un mécanisme de vieillissement quand l'utilisateur se déconnecte anormalement, et la suppression de la configuration de raccordement QinQ de l'utilisateur.

12. Support lisible par ordinateur selon la revendication 11, dans lequel le message obtenu est un message de Découverte selon le Protocole de Configuration Dynamique d'Hôte, DHCP, et les informations de VLAN de l'utilisateur dans le message obtenu sont utilisées pour créer dynamiquement une configuration de raccordement QinQ ; et
dans lequel le message obtenu est un message de Libération selon le Protocole de Configuration Dynamique d'Hôte, DHCP, quand l'utilisateur se déconnecte normalement.

13. Support lisible par ordinateur selon la revendication 11, dans lequel le message obtenu est un message de Confirmation de Session de Découverte Active PPPoE, PADS, et les informations de VLAN de l'utilisateur dans le message obtenu sont utilisées pour créer dynamiquement la configuration de terminaison QinQ ; et
dans lequel le message obtenu est un message de Libération selon le Protocole de Configuration Dynamique d'Hôte, DHCP, ou un message de Terminaison de Découverte Active PPPoE, PADT, quand l'utilisateur se déconnecte normalement.
